# EUROPEAN PATENT APPLICATION

(11) **EP 3 036 990 A2**
(43) Date of publication of application: **29.06.2016**
(21) Application number: 15201974.1
(22) Date of filing: 22.12.2015
(51) Int. Cl.: A01G 31/00, A01G 31/04

(54) **A SYSTEM AND METHOD FOR GROWING CROPS AND COMPONENTS THEREFOR**

(30) Priority: 24.12.2014 US 201414582247
(71) Applicant: Microware Limited, Gibraltar (GI)
(72) Inventor: KABAKOV, Bentsion, Queensway Quay (GI)
(74) Representative: Gallo, Luca

(57) **Abstract**

A system for growing crops includes a plurality of growing troughs with intake regions for receiving a nutrient solution and drains for releasing run-off of the nutrient solution. A nutrient circulation system with circulation subsections provides the nutrient solution to crops in the growing troughs. For each circulation subsection a piping arrangement with pipe outlets distributes the nutrient solution from a reservoir to the intake regions of a first subset of the growing troughs, and collects the nutrient solution from the drains of a non-identical second subset of the growing troughs in a drainage arrangement. The nutrient solution follows a flow path circulating through the reservoirs. The flow paths to the pipe outlets are sequentially split for equivalent flow impedance through each of the flow paths. A conveyor system moves the growing troughs from a planting location to a harvesting location and periodically increases the spacing between adjacent growing troughs.

## Description

### FIELD AND BACKGROUND OF THE INVENTION

The present invention relates to crop growing systems.

### SUMMARY OF THE INVENTION

The present invention is a system and method for providing a functionality for growing crops. The invention is of particular value in the context of sustainable urban farming, including rooftop greenhouses, and networks of commercial greenhouses that are operated from a common control center.

According to the teachings of an embodiment of the present invention there is provided, a system for growing crops comprising: (a) a plurality of growing troughs, each of the growing troughs comprising: (i) an intake region for receiving a nutrient solution; and (ii) a drain for releasing a run-off of the nutrient solution; (b) a nutrient circulation system for providing the nutrient solution to crops in the growing troughs comprising a plurality of circulation subsections, each of the circulation subsections comprising: (i) a piping arrangement with a plurality of pipe outlets for distributing the nutrient solution to the intake regions of a subset of the growing troughs; (ii) a reservoir in fluid flow connection with the piping arrangement; (iii) a pump in fluid flow connection with the reservoir configured to pump the nutrient solution from the reservoir through the piping arrangement to the pipe outlets; and (iv) a drainage arrangement for collecting nutrient solution from the drains of a subset of the growing troughs, wherein, for each of the circulation subsections, the drainage arrangement collects nutrient solution from drains of a first subset of the growing troughs, and the piping arrangement distributes the nutrient solution to the intake region of a second subset of the growing troughs, the first and second subsets being non-identical such that the nutrient solution follows a flow path circulating through a plurality of the reservoirs.

According to a further feature of an embodiment of the present invention, each of the piping arrangements comprises: (A) a main pipe; and (B) a plurality of pipe outlets, the flow from the main pipe to each of the pipe outlets constituting a flow path, each of the flow paths being the result of a sequential splitting from the main pipe such that there is an equivalent flow impedance through each of the flow paths.

According to a further feature of an embodiment of the present invention, the first and second subsets are non-overlapping.

According to a further feature of an embodiment of the present invention, each of the circulation subsections further comprises: (i) a return drainage arrangement for collecting unused nutrient solution from a subset of the pipe outlets.

According to a further feature of an embodiment of the present invention, system for growing crops further comprises: (a) a nutrient solution volume adjustment mechanism in fluid flow connection with at least one of the reservoirs configured for allowing the flow of water from a mains water supply to the reservoir when a total volume of nutrient solution satisfies a threshold criteria; and (b) a metering system comprising: (i) a measurement apparatus associated with the nutrient circulation system for measuring at least one characteristic of the nutrient solution; (ii) a plurality of containers, each of the containers configured to hold at least one ingredient of the nutrient solution; (iii) a metering arrangement associated with each of the containers and configured for delivering a metered quantity of each of the ingredients into the nutrient solution; and (iv) an ingredient controller associated with the measurement apparatus and the containers for actuating the metering arrangement based on the at least one characteristic in order to maintain the at least one characteristic within a defined range.

According to a further feature of an embodiment of the present invention, the growing troughs occupy a crop growing area, and a total volume of water in the nutrient circulation system is less than 20 Liters per square meter of the crop growing area.

According to a further feature of an embodiment of the present invention, the pipe outlets are at a vertical distance of less than 1 meter above a fluid level in the reservoirs.

According to a further feature of an embodiment of the present invention, the pumps are configured to provide pressurized nutrient solution at a maximum pressure of less than 0.2 bar.

According to a further feature of an embodiment of the present invention, the system for growing crops is deployed on the rooftop of a building having an area of at least 2000 square meters.

According to a further feature of an embodiment of the present invention, the growing troughs occupy a crop growing area; and the combined average weight of the system including the growing troughs and the nutrient circulation system is less than 150 kilograms per square meter of the crop growing area.

According to a further feature of an embodiment of the present invention, the average time the nutrient solution is in the reservoirs between circulations is less than 10 minutes.

According to a further feature of an embodiment of the present invention, a total volume of water in the reservoirs is reduced by at least 50% during operation of the pumps.

According to a further feature of an embodiment of the present invention, each of growing troughs is associated with an RFID tag operable to receive an interrogator signal and to transmit an authentication signal, such that when an RFID reader passes over the RFID tag and transmits an interrogator signal, an authentication signal is generated.

According to a further feature of an embodiment of the present invention, the system for growing crops further comprises: (a) a conveyor system for moving the growing troughs from a planting location to a harvesting location, the conveyor system comprising a first conveyor assembly and a second conveyor assembly, the second conveyor assembly overlapping with the first conveyor assembly thereby defining an overlap section, each of the conveyor assemblies comprising: (i) at least one conveyor rail; (ii) a mechanical trough moving arrangement attached to the at least one conveyor rail reciprocally movable in a retraction direction and an advancing direction; and (iii) a drive motor assembly associated with the trough moving arrangement for actuating movement of the trough moving arrangement in the retraction direction from a first position to a second position and in the advancing direction from the second position to the first position, the movement of the trough moving arrangement from the first position to the second position defining a stroke length, wherein the trough moving arrangement has a set of depressible ratchet teeth deployed such that, when the mechanical trough moving arrangement is moved in the retraction direction, growing troughs positioned above the mechanical trough moving arrangement do not move, and when the mechanical trough moving arrangement is moved in the advancing direction, growing troughs positioned above the mechanical trough moving arrangement are moved in the advancing direction, and wherein the stroke length of the second conveyor assembly is larger than the stroke length of the first conveyor assembly, and wherein the overlap section is configured such that only one of the growing troughs is transferred from the first conveyor assembly to the second conveyor assembly for each reciprocal motion of the second conveyor.

According to a further feature of an embodiment of the present invention, the system for growing crops further comprises a support structure for supporting the growing troughs and the reservoirs spaced at least 30 centimeters above an underlying surface.

There is also provided according to an embodiment of the present invention, a system for growing crops comprising: (a) a plurality of growing troughs, each of the growing troughs comprising: (i) an intake region for receiving a nutrient solution; and (ii) a drain for releasing a run-off of the nutrient solution; (b) a circulation subsection comprising: (i) a piping arrangement for distributing the nutrient solution to the intake regions corresponding to a subset of the growing troughs, the piping arrangement comprising: (A) a main pipe; and (B) a plurality of pipe outlets for providing the nutrient solution to crops in the subset of growing troughs, wherein the flow from the main pipe to each of the pipe outlets constitutes a flow path, each of the flow paths being the result of a sequential splitting from the main pipe such that there is an equivalent flow impedance through each of the flow paths; (ii) a reservoir in fluid flow connection with the piping arrangement; (iii) a pump in fluid flow connection with the reservoir configured to pump the nutrient solution from the reservoir through the piping arrangement to the pipe outlets.

There is also provided according to an embodiment of the present invention, a system for growing crops comprising: (a) a plurality of growing troughs, each of the growing troughs comprising: (i) an intake region for receiving a nutrient solution; and (ii) a drain for releasing a run-off of the nutrient solution; (b) a conveyor system for moving the growing troughs from a planting location to a harvesting location, the conveyor system comprising a first conveyor assembly and a second conveyor assembly, the second conveyor assembly overlapping with the first conveyor assembly thereby defining an overlap section, each of the conveyor assemblies comprising: (i) at least one conveyor rail; (ii) a mechanical trough moving arrangement attached to the at least one conveyor rail reciprocally movable in a retraction direction and an advancing direction; and (iii) a drive motor assembly associated with the trough moving arrangement for actuating movement of the trough moving arrangement in the retraction direction from a first position to a second position and in the advancing direction from the second position to the first position, the movement of the trough moving arrangement from the first position to the second position defining a stroke length, wherein the trough moving arrangement has a set of depressible ratchet teeth deployed such that, when the mechanical trough moving arrangement is moved in the retraction direction, growing troughs positioned above the mechanical trough moving arrangement do not move, and when the mechanical trough moving arrangement is moved in the advancing direction, growing troughs positioned above the mechanical trough moving arrangement are moved in the advancing direction, and wherein the stroke length of the second conveyor assembly is larger than the stroke length of the first conveyor assembly, and wherein the overlap section is configured such that only one of the growing troughs is transferred from the first conveyor assembly to the second conveyor assembly for each reciprocal motion of the second conveyor.

According to a further feature of an embodiment of the present invention, the system for growing crops further comprises a support structure located above the conveyor assemblies for supporting the growing troughs, the support structure comprising: (a) a frame configured to support the weight of the growing troughs; and (b) a plurality of legs connected to the frame, each of the legs having an adjustable length.

There is also provided according to an embodiment of the present invention, a method of growing crops comprising the steps of: (a) obtaining a plurality of growing troughs for growing crops with an intake region for receiving a nutrient solution consisting of a plurality of ingredients and a drain region for releasing a run-off of the nutrient solution; (b) placing each of the plurality of growing troughs on an inclined support structure such that the nutrient solution flows from the intake region to the drain region; (c) obtaining first and second reservoirs; (d) distributing the nutrient solution from the second reservoir to the intake region of a first subset of growing troughs; (e) distributing the nutrient solution from the first reservoir to the intake region of a second subset of growing troughs; (f) collecting nutrient solution from drains of a first subset of growing troughs into the first reservoir; and (g) collecting nutrient solution from drains of the second subset of growing troughs into the second reservoir.

According to a further feature of an embodiment of the present invention, the method of growing crops further comprises the steps of: (a) moving each of the plurality of growing troughs incrementally from a planting location towards a harvesting location; and (b) periodically increasing a spacing between adjacent growing troughs.

According to a further feature of an embodiment of the present invention, the method of growing crops further comprises the steps of: (a) supplying the nutrient solution to the plurality of growing troughs through a sequentially split piping arrangement in fluid flow connection with the reservoirs.

According to a further feature of an embodiment of the present invention, the method of growing crops further comprises the steps of: (a) adding water to at least one of the reservoirs based on a total volume of nutrient solution in the reservoir; (b) measuring at least one characteristic of the nutrient solution; and (c) adjusting the individual ingredients based on the at least one characteristic.

There is also provided according to an embodiment of the present invention, a method of growing crops comprising the steps of: (a) obtaining a plurality of growing troughs for growing crops with an intake region for receiving a nutrient solution consisting of a plurality of ingredients and a drain region for releasing a run-off of the nutrient solution; (b) placing each of the plurality of growing troughs on an inclined support structure such that the nutrient solution drips from the intake region to the drain region; and (c) supplying the nutrient solution to the plurality of growing troughs through a piping arrangement in fluid flow connection with a reservoir, the piping arrangement including a main pipe and a plurality of pipe outlets, wherein the flow from the main pipe to each of the pipe outlets constitutes a flow path, each of the flow paths being the result of a sequential splitting from the main pipe such that there is an equivalent flow impedance through each of the flow paths.

According to a further feature of an embodiment of the present invention, the method of growing crops further comprises the steps of: (a) moving each of the plurality of growing troughs from a planting location to a harvesting location; and (b) periodically increasing a spacing between adjacent growing troughs.

According to a further feature of an embodiment of the present invention, the method of growing crops further comprises the steps of: (a) adding water to at least one of the reservoirs based on a total volume of nutrient solution in the reservoir; (b) measuring at least one characteristic of the nutrient solution; and (c) adjusting the individual ingredients based on the at least one characteristic.

There is also provided according to an embodiment of the present invention, a method of growing crops comprising the steps of: (a) obtaining a growing trough; (b) planting a first crop in the growing trough, the first crop including a root system; (c) moving the growing trough incrementally through a crop growing area from a planting location towards a harvesting location; (d) harvesting the first crop in the harvesting location while leaving the root system intact in the growing trough; and (e) transporting the growing trough to a portion of the growing area near the planting location for growing a second crop from the root system.

According to a further feature of an embodiment of the present invention, the transporting is performed by a transport device deployed for moving across the crop growing area.

### BRIEF DESCRIPTION OF THE DRAWINGS

The invention is herein described, by way of example only, with reference to the accompanying drawings, wherein:
FIG. 1 is a schematic diagram of a support structure according to an embodiment of the invention;
FIG. 2A is a schematic diagram of a growing trough according to an embodiment of the invention;
FIG. 2B is a schematic diagram of a growing trough positioned on a support structure according to an embodiment of the invention;
FIG. 3 is a schematic diagram of a conveyor system according to an embodiment of the invention;
FIG. 4 is a side view of a component of a conveyor system according to an embodiment of the invention;
FIGS. 5A-5C are schematic side views of a growing trough being moved by a conveyor system according to an embodiment of the invention, shown in successive states during operation of the conveyor system;
FIGS. 6A-6C are schematic top views of a conveyor system for increasing the spacing between growing troughs according to an embodiment of the invention, shown in successive states during operation of the conveyor system;
FIG. 7 is a schematic diagram of a nutrient circulation system according to an embodiment of the invention;
FIG. 8 is a schematic diagram of a circulation subsection according to an embodiment of the invention;
FIG. 9 is close-up view of a growing trough positioned above a return drainage according to an embodiment of the invention;
FIG. 10 is a diagram of a metering system for monitoring the nutrient solution according to an embodiment of the invention.

### DESCRIPTION OF THE PREFERRED EMBODIMENTS

The present invention is a system and method for providing a functionality for growing crops.

The principles and operation of a system and method according to the present invention may be better understood with reference to the drawings and the accompanying description.

The present invention is applicable to hydroponic crop growing where crops are grown in growing troughs, and is of particular value when applied to crop growing in a greenhouse situated on the rooftop of a building. In order to enable the use of building roofs for agricultural purposes, strict limits must be placed on the weight of the system, and most critically, on the quantity of water used, in order to stay within the permitted structural loads for which buildings are commonly designed.

In hydroponic crop growing systems, nutrient solution is supplied to the roots of crops to provide the crop roots with water and nutrients. The nutrient solution is a water based solution with added nutrients maintained at suitable concentrations and pH, all as is known in the art of hydroponics and aeroponics. The present invention is most preferably implemented using a thin nutrient film technique in which a shallow stream of a nutrient solution is recirculated past the crop roots in a growing trough.

Before explaining at least one embodiment of the invention in detail, it is to be understood that the invention is not necessarily limited in its application to the details of construction and the arrangement of the components and/or methods set forth in the following description and/or illustrated in the drawings and/or the examples. The invention is capable of other embodiments or of being practiced or carried out in various ways.

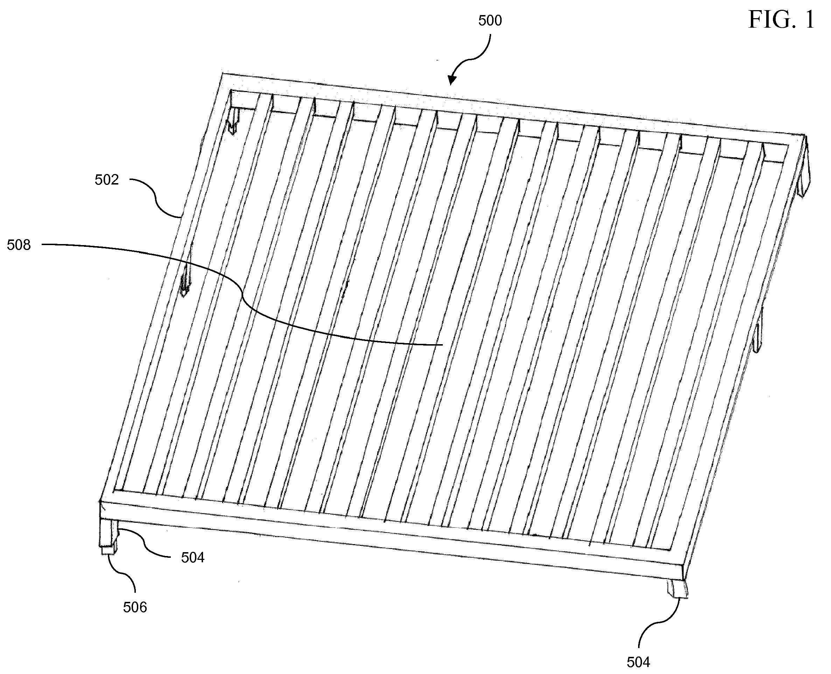

Referring now to the drawings, FIGS. 1, 2A, 3 and 10 are schematic diagrams of the preferable major elements of an embodiment of a system **10** and corresponding components for providing a crop growing functionality. Major elements of system **10** preferably include a plurality of growing troughs **200** for growing crops using hydroponic techniques, a conveyor system **30** for incrementally moving growing troughs **200** from a planting location through a growing area to a harvesting location, a nutrient circulation system **40** for circulating a nutrient solution, preferably a thin nutrient film, to the crops in each of growing troughs **200,** and a support structure **500** such as a scaffold or the like, for supporting growing troughs **200.** Throughout this description, the area occupied by growing troughs **200** is referred to as the growing area.

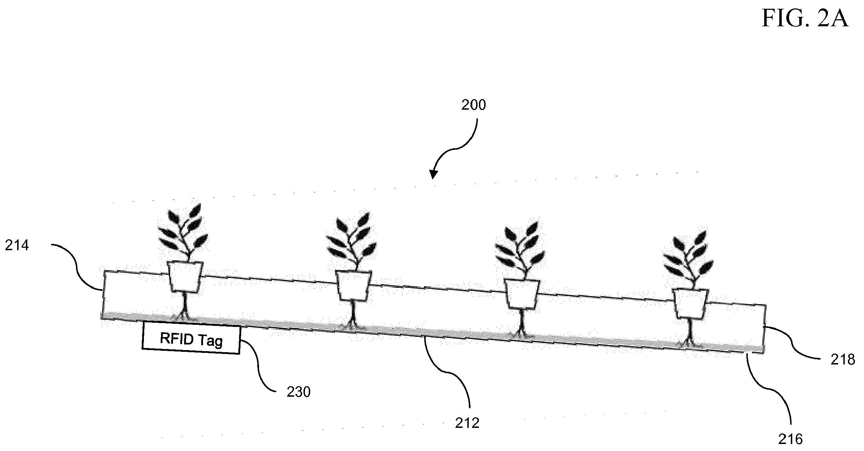

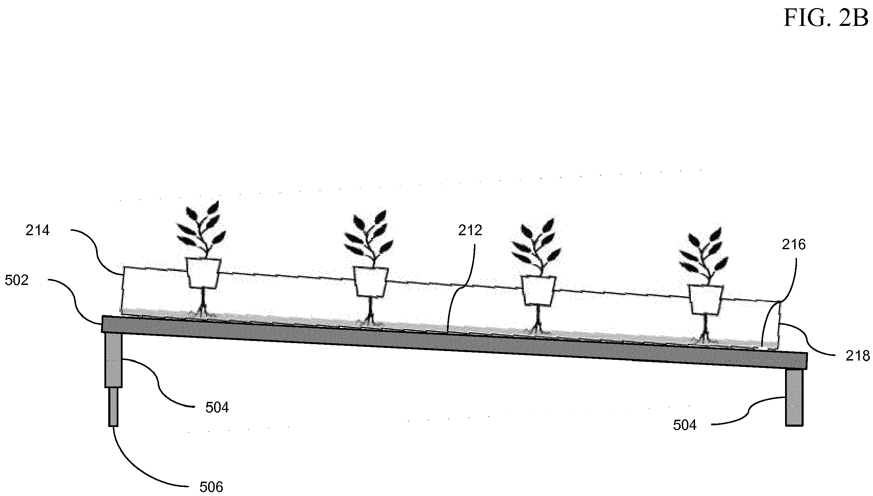

With reference to FIGS. 1, 2A and 2B, each individual growing trough **210** preferably includes a trough base **212,** a nutrient solution intake region **214,** and a drain **216** located in an outlet region **218.** The roots of the crops in growing trough **210** rest along trough base **212.** Each growing trough **210** can be made of any suitable material that facilitates the healthy growth of crops using known hydroponic techniques. It is most preferable that each individual growing trough **210** is made of ultraviolet (UV) resistant Polyvinyl chloride (PVC). The PVC material provides added durability to growing troughs **200,** decreasing the frequency at which growing troughs **210** need to be replaced. The UV resistant property of the PVC material helps to reduce the negative effects UV exposure can have on the troughs. Support structure **500** allows for growing troughs **200** to be positioned at an adjustable incline such that intake region **214** is at a greater height than outlet region **218.** The incline of growing troughs **200** facilitates the distribution of the nutrient solution to the roots of the crops in the growing trough. The nutrient solution is introduced at intake region **214** and subsequently flows towards outlet region **218,** supplying a mixture of oxygen and nutrients to the crop roots. The nutrient solution is absorbed by the roots of the crops and the excess, or run-off, nutrient solution then exits growing trough **210** through drain **216.** In one particularly preferred but non-limiting set of implementations, growing troughs of 6 meters in length are positioned with an incline generating an end-to-end height differential ranging from 3-30 centimeters. The ratios of height differential to trough length translate to 0.5%-5% grade incline, or about 0.3-3 degrees. Most preferably, the incline angle is 0.8-1.5 degrees (1.5%-2.5% grade incline). This allows for the nutrient solution to flow slowly from intake region **214** to outlet region **218.** The amount of time for a single drop of nutrient solution to move from intake region **214** to drain **216** is typically approximately 2 minutes, but varies as a function of the incline angle and the degree of development of the root systems of plants in the trough. Although FIGS. 2A-2B show growing trough **200** as being closed at ends near intake and outlet regions **214** and **218,** other embodiments are possible in which the growing trough is open. Drain **216** may be one or more dedicated hole formed in the base of the trough, or may be implemented simply as an open end of the growing trough that defines outlet region **218.** In either case, the run-off nutrient solution simply exits out of outlet region **218** under gravitational flow.

It is preferred that support structure **500** has a frame **502** and a plurality of support legs **504.** Preferably, frame **502** has a cross bar structure with a plurality of support bars **508** for supporting the weight of growing troughs **200.** Frame **502** allows for access to the area below growing troughs **200** for cleaning and maintenance or the like. Each leg **504** preferably includes an adjustable element **506** for adjusting the height of each leg **504.** The adjustable height of legs **504** translates to an adjustable incline of support structure **500.** The incline angle of support structure **500** defines the incline angle of growing troughs **210.** The height adjustment of support legs **504** may be accomplished manually or by a mechanical lift structure such as a hydraulic lift or the like connected with a controller device. For a wide range of applications, it may be sufficient to choose a suitable incline angle during installation of system **10** which can then be left unchanged for an extended period, in which case manual adjustment is typically preferred. It is preferable that conveyor system **30** is integrated with support structure **500,** allowing for growing troughs **200** to be placed on support structure **500** and above conveyor system **30** simultaneously. Types of materials used for constructing support structure **500** include, but are not limited to, aluminum, steel, and any other material suitable for supporting the relevant weights. System **10** may be used to advantage in conjunction with a transport device for providing services to the crops in growing troughs **200.** A type of transport device which may be used for providing such services is gantry with wheels which are configured to operate along the edges of frame **502.** Therefore it is preferable that frame **502** is made of a material suitable for simultaneously supporting a plurality of growing troughs with their associated nutrient solution circulation system, as well as a gantry.

As the crops in growing troughs **200** grow and develop, the size of each plant increases. In order to avoid encroachment of crops into adjacent growing troughs which would negatively affect the health and viability of the crops, troughs holding more developed plants should be adequately spaced from each other. In order to avoid wasteful over-spacing of the crops during the earlier part of their growth, before the leaves spread significantly, it is preferable to start with closely spaced troughs and gradually increase the spacing between adjacent growing troughs as the growing troughs progress from the planting location to the harvesting location. Using this variable spacing approach, it is typically possible to achieve an average of up to about 60 plants per square meter over the entire growing area and life cycle of the crops.

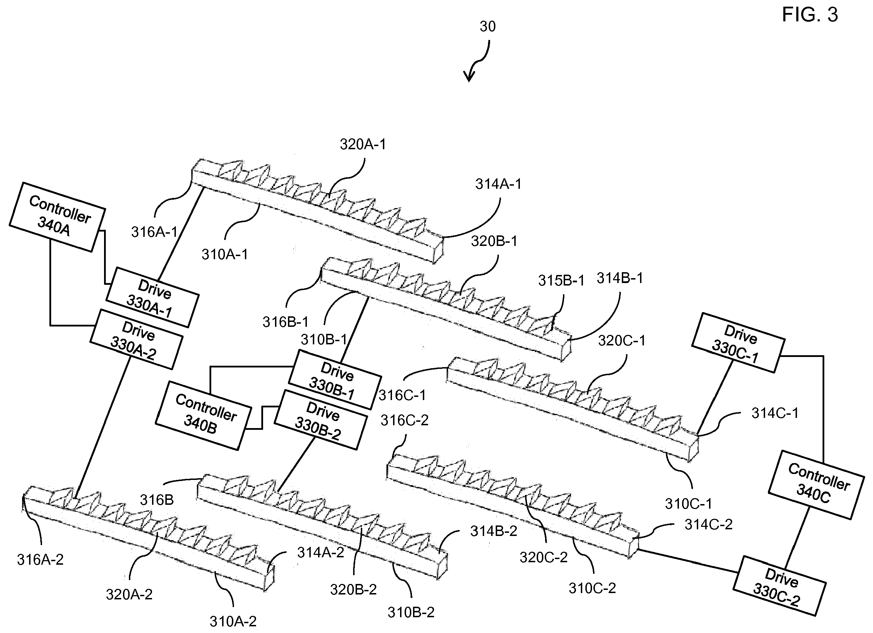

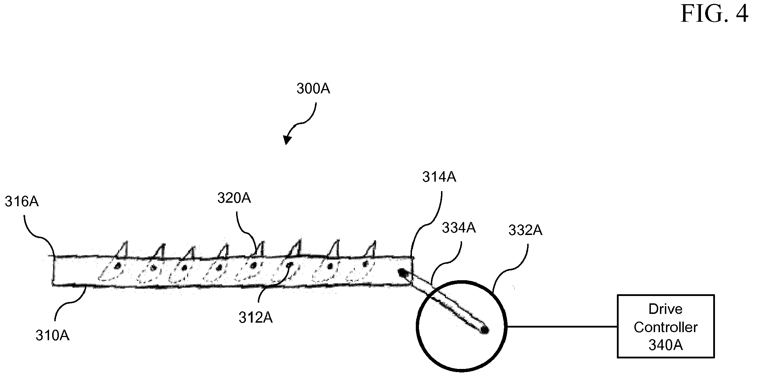

The movement of growing troughs **200** from the planting location to the harvesting location, as well as the increasing of spacing between adjacent growing troughs, is accomplished by conveyor system **30.** With reference to FIGS. 3 and 4, major elements of conveyor system **30** preferably include a first conveyor assembly **300A** and a second conveyor assembly 300B. First conveyor assembly **300A** preferably includes at least one conveyor rail **310A**, a mechanical trough moving arrangement **320A** attached to at least one conveyor rail **310A**, and a drive motor assembly **330A** for moving mechanical trough moving arrangement **320A** along conveyor rail **310A**. In one particularly preferred but non-limiting implementation, drive motor assembly **330A** includes a motor driven wheel **332A** with a connector **334A** such as a rod or the like for transferring motion from wheel **332A** to trough moving arrangement **320A** when drive motor assembly **330A** is actuated by a drive controller **340A** or the like. One end of connector **334A** is attached to an off-center position of wheel **332A** in order to generate circular-to-linear motion for moving trough moving arrangement **320A**. Clearly, other arrangements in which the required linear motion is achieved by various linear or rotary actuators may also be used. According to one further example, an arrangement of cables may be linked to a drum turned by a stepper motor or a motor with an encoder in order to displace each set of conveyor rails bidirectionally through the desired range of motion with a desired degree of accuracy.

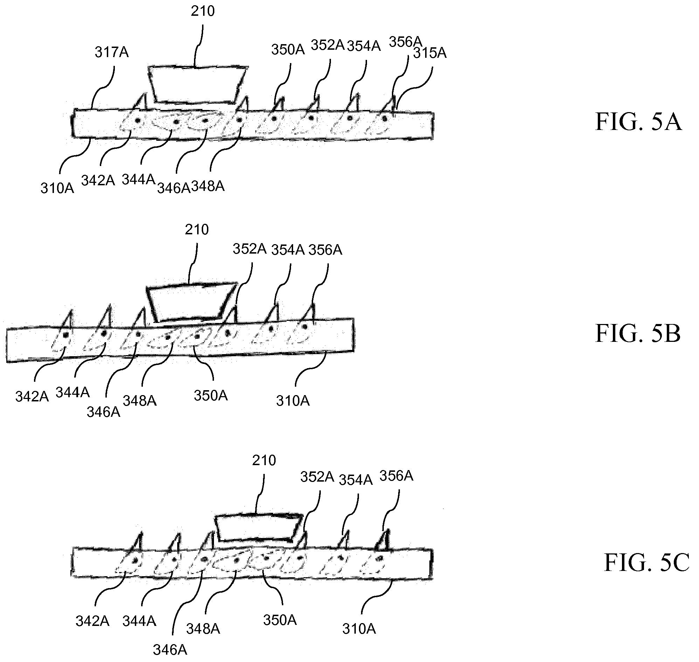

Conveyor rail **310A** has a first end **314A** and a second end **316A**. It is preferred that trough moving arrangement **320A** includes a plurality of depressible (ratchet) teeth **320A**. Depressible teeth **320A** are preferably aligned in a row with equal spacing between individual teeth. Depressible teeth **320A** are configured to move uniformly in a linearly reciprocating fashion, meaning that a single actuation of drive motor assembly **330A** causes the entire row of depressible teeth **320A** to move from a first position (FIG. 5A), towards a second position (FIG. 5B), and back to the first position. The movement of depressible teeth **320A** from the first position towards the second position is hereinafter referred to as the retraction stroke of depressible teeth **320A**. Likewise, the return movement of depressible teeth **320A** towards the first position is hereinafter referred to as the advancing stroke of depressible teeth **320A**. The total movement of depressible teeth **320A** as it linearly slides between its first position and second position is defined to be the stroke length of depressible teeth **320A**. The stroke length can be adjusted by varying the off-center attachment position of connector **334A** and wheel **332A**. It is preferred that the stroke length is in the range of 1-30 centimeters. According to one non-limiting example, depressible teeth **320A** may move approximately 8 centimeters in each linear direction, providing a stroke length of approximately 8 centimeters.

FIG. 4 shows a side view of first conveyor assembly **300A**. Conveyor rail **310A** is preferably positioned horizontally, such that it is substantially parallel to the floor of the growing area. It is preferred that depressible teeth **320A** are deployed along an active length of conveyor rail **310A**. Each of the depressible teeth **320A** is connected to conveyor rail **310A** and has a structure which allows depressible teeth **320A** to depress in one direction but prevents teeth **320A** from depressing in an opposite direction. Depressible teeth **320A** are shown in FIG. 4 in phantom. The structure which prevents depressible teeth **320A** from depressing in both directions may be any suitable structure, including, but not limited to, a ratchet with a pawl, a spring or the like. Each tooth is preferably connected to conveyor rail **310A** by a pivot pin or the like **312A** which passes through an aperture in each tooth. Depressible teeth **320A** are normally in an upright position and only depress when applied with an external force in the direction of depression. The direction of depression of depressible teeth **320A** is the direction towards first end **314A**. Depressible teeth **320A** preferably have a structure which allows for depressible teeth **320A** being in an upright position when not forcibly depressed. An example of such a structure is depicted in FIG. 4. As shown in FIG. 4, each individual tooth is preferably larger on the portion below connecting rod **312A** such that the center of mass of each individual tooth causes the tooth to be in an upright position when not forcibly depressed. As depicted in FIG. 3, it is preferable that conveyor assembly **300A** has two conveyor rails **310A-1** and **310A-2** with depressible teeth **320A-1** and **320A-2** and drive motor assemblies **330A-1** and **330A-2**. Conveyor rails **310A-1** and **310A-2** are preferably positioned near opposite ends of growing troughs **200** such that movement is imparted symmetrically to both ends of growing troughs **200** during movement by conveyor system **30.** It is also preferred that conveyor rails **310A-1** and **310A-2** are parallel to each other. Most preferably, the drive motor assemblies **330A-1** and **330A-2** are associated with a single drive controller **340A** in order to maintain synchronization across motor drive assemblies **330A**. Synchronization of drive motor assemblies **330A-1** and **330A-2** facilitates the movement of both ends of a single growing trough **210** at the same rate, thus maintaining orientation and alignment during movement by conveyor system **30.** It is noted that the description herein of the structure and operation of second conveyor assembly **300B** is generally similar to that of first conveyor assembly **300A** unless expressly stated otherwise, and will be understood by analogy thereto. A specific feature of second conveyor assembly **300B** that is different from first conveyor assembly **300A** is the stroke length. It is preferred that the stroke length of second conveyor assembly **300B** is greater than the stroke length of first conveyor assembly **300A** to facilitate the increasing of spacing between adjacent growing troughs. The spacing increase will be described in subsequent sections of this description. By way of one non-limiting example, the stroke length of second conveyor assembly **300B** may be approximately 12 centimeters, and alternatively may be 16 or 24 centimeters depending on the desired spacing adjustment between adjacent growing troughs. Types of materials used for constructing conveyor rails **310A-1** and **310A-2** and depressible teeth **320A-1** and **320A-2** may include, but are not limited to, steel, aluminum, and other suitable materials. Although the system described thus far has pertained to a conveyor assembly **300A** having two conveyor rails **310A-1** and **310A-2** each having respective depressible teeth and drive assemblies, other embodiments are possible in which a conveyor assembly has more than two conveyor rails having depressible teeth and drive assemblies.

Individual growing troughs **210** are typically positioned on support structure 500 above first conveyor assembly **300A** at a planting location, which is typically at one end of the growing area in order to facilitate accessibility by workers involved in the planting. The placement of growing trough **210** above conveyor assembly **300A** causes the individual teeth below trough base **212** to be depressed. The positioning of growing trough **210** on support structure **500** may be accomplished manually or using mechanical lift equipment or the like. As previously described, the positioning of growing trough **210** allows for simultaneous support by support structure **500** and movement by conveyor system **30**. The mechanism for moving a growing trough **210** is herein described with reference to FIGS. 5A-5C. For illustration purposes of this example only, depressible teeth **320A** consists of individual teeth **342A**, **344A**, **346A**, **348A**, **350A**, **352A**, **354A**, and **356A**. The number of depressible teeth is not limited to the number depicted schematically in this example. As shown in FIG. 5A, growing trough **210** is initially positioned above depressible teeth **320A** such that individual teeth **344A** and **346A** are depressed by growing trough **210**. As shown in FIG. 5B, when motor drive assembly **330A** is actuated, the retraction stroke of depressible teeth **320A** causes individual teeth **348A** and **350A** to pass below growing trough **210**. Growing trough **210** forcibly depresses individual teeth **348A** and **350A**. Simultaneously, individual teeth **344A** and **346A** are moved to a position no longer below growing trough **210**, such that individual teeth **344A** and **346A** return to the normal upright position. The advancing stroke of depressible teeth **320A** in the same actuation of drive motor assembly **330A** moves growing trough **210** in the forward direction the same amount as the stroke length, as shown in FIG. 5C. This example is purely schematic, and does not accurately represent the number of teeth which are depressed due to the placement of a growing trough **210** above a conveyor, which is a function of the width of a growing trough **210** and the spacing between the teeth.

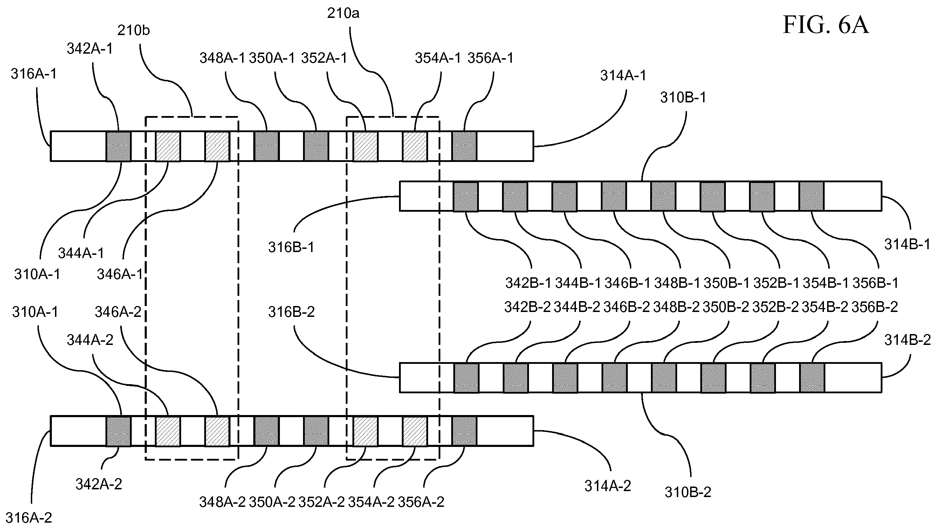

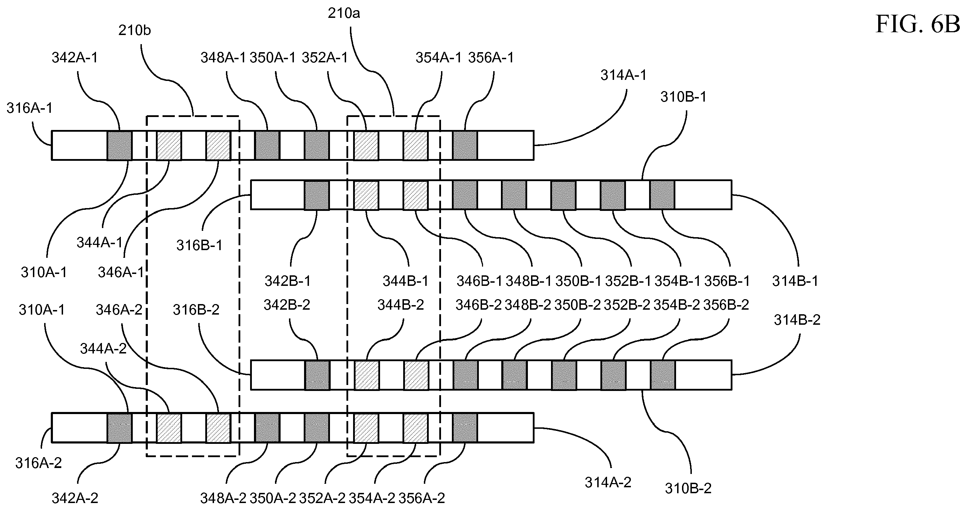

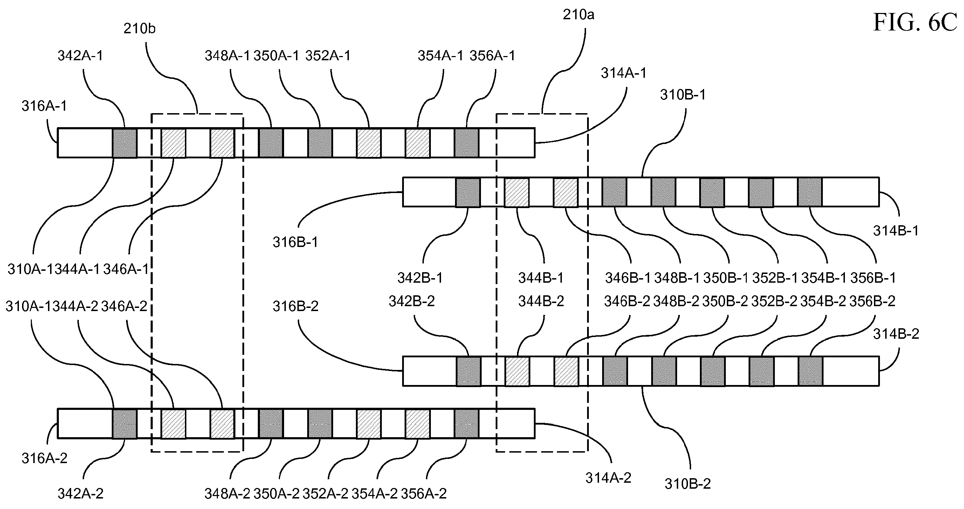

Referring again to FIG. 3, it is preferred that conveyor rails **310B-1** and **310B-2** overlap with conveyor rails **310A-1** and **310A-2** to whatever extent is necessary to ensure reliable hand-over of troughs between the successive conveyor assemblies, while ensuring that only one trough is transferred between the conveyor assemblies per cycle of motion. As a result, the greater stroke length of second conveyor assembly **300B** results in a corresponding increase in the spacing between adjacent growing troughs. The adjustment of the spacing between a pair of growing troughs **210a** and **210b** is shown with reference to FIGS. 6A-6C.

Although the system described thus far has pertained to two conveyor assemblies, other embodiments are possible in which greater numbers of conveyor assemblies are used. The number of conveyor assemblies in conveyor system **30** may be parameterized as a function of the size of the growing area. For example, wider growing areas may be conducive to fit three or more conveyor assemblies, which in turn can be arranged to further increase the spacing between adjacent growing troughs.

The movement of growing troughs **200** by conveyor system **30** contributes to the wear on growing troughs **200** in part due to the friction between growing troughs **200** and support structure **500.** In order to reduce friction between growing troughs **200** and support structure **500,** a low friction material such as high-density polyethylene (HDPE) or the like is preferably positioned between growing troughs **200** and support structure **500.** In one particular but non-limiting implementation, segments of HDPD are attached to the portions of the bases **212** of growing troughs **200** which are in contact with support structure **500.** The reduction in friction further decreases the frequency at which individual growing troughs **210** need replacement, and reduces the power required from the displacement mechanism.

As previously mentioned, system **10** is most preferably implemented using a thin nutrient film technique. In a thin nutrient film technique, there is no soil or standing nutrient solution to act as a buffer for preventing the dehydration of the roots of crops. The dehydration of roots leads to rapid crop death making it critical to supply the roots with nutrient solution without extended disruptions. Nutrient circulation system **40** provides the nutrient solution to intake regions **214** through a distributed location of nutrient supply outlets. As growing troughs **200** are advance through the growing area by conveyor system **30,** intake regions **214** are aligned with the nutrient supply outlets in a position to receive nutrient solution.

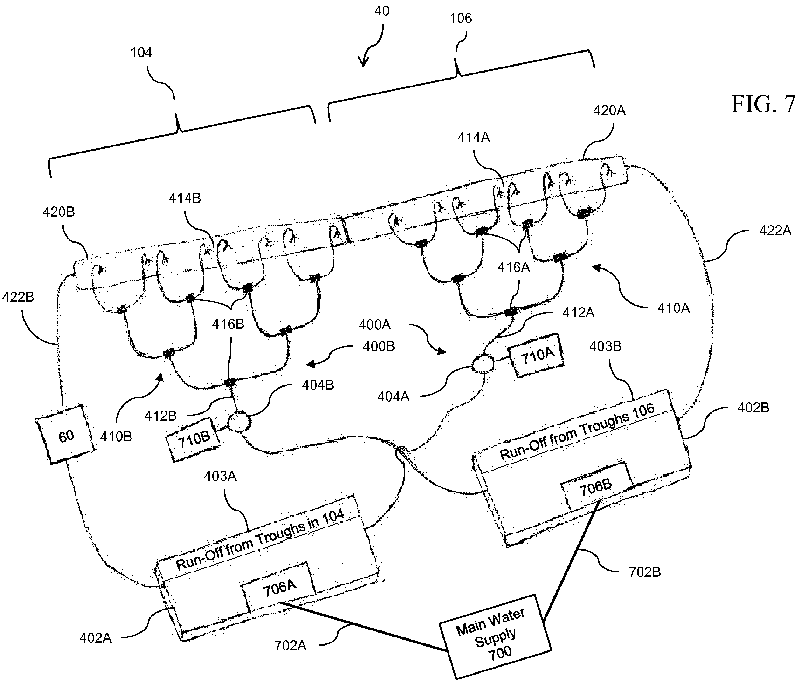

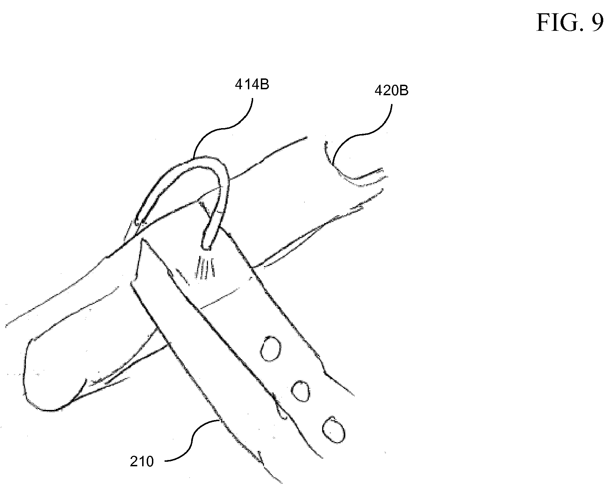

Referring to FIGS. 7-9, details of nutrient circulation system **40** will now be described. Nutrient circulation system **40** preferably includes a plurality of circulation subsections **400.** Major elements of a circulation subsection **400** preferably include a piping arrangement **410** for delivering the nutrient solution to a subset of growing troughs **200,** a reservoir **402** in fluid flow connection with piping arrangement **410,** a pump **404** in fluid flow connection with reservoir **402** for pumping the nutrient solution from reservoir **402** to piping arrangement **410,** and a drainage arrangement **403** for collecting run-off nutrient solution from a subset of growing troughs **200.** Piping arrangement includes a plurality of pipe outlets **414** for dispensing the nutrient solution to intake regions **214.**

In order to reduce the pumping power required to move the nutrient solution from reservoir **402** to outlets **414,** it is preferred that pipe outlets **414** are positioned less than one meter vertically above the fluid level in reservoir **402.** The action of pumping the nutrient solution from reservoir **402** to outlets **414** pressurizes the nutrient solution. It is preferred that the maximum pressure of the nutrient solution in nutrient circulation system **40** is less than 0.5 bar, and most preferably less than 0.2 bar. Pump **404** may be a variable rate pump associated with a pump controller **710** for regulating the pumping rate of the nutrient solution to growing troughs **200.** The pump controller may allow control of the rate at which nutrient solution is delivered to the troughs, typically as part of an overall set of parameters centrally controlled by a computerized growth-management system which suits the growing conditions (nutrient solution concentrations, flow rates etc.) to the crops being cultivated. In alternative implementations, a fixed rate pump of suitably chosen capacity may be sufficient.

FIG. 7 shows one non-limiting example with two circulation subsections. In such an example, it is preferred that the growing area is divided into a first section **104** and second section **106.** The growing troughs located in first section **104** are referred to as the first subset of growing troughs **200,** and the growing troughs located in second section **106** are referred to as the second subset of growing troughs **200.**

The nutrient solution is pumped by first pump **404A** from first reservoir **402A** to first pipe outlets **414A** via first piping arrangement **410A**. First pipe outlets **414A** subsequently dispense the nutrient solution into nutrient solution intake regions **214** of the second subset of growing troughs **200.** Similarly, the nutrient solution is pumped by second pump **404B** from second reservoir **402B** to second pipe outlets **414B** via second piping arrangement **410B.** Second pipe outlets **414B** subsequently dispense the nutrient solution into nutrient solution intake regions **214** of the first subset of growing troughs **200.**

As previously described, the run-off nutrient solution flows out of drains **216.** Outlet regions **218** of the first subset of growing troughs **200** are aligned with drainage arrangement **403B** for collecting the run-off nutrient solution from the drains of the first subset of growing troughs. The run-off nutrient solution subsequently flows through drainage arrangement **403B** into second reservoir **402B.** Likewise, outlet regions **218** of the second subset of growing troughs **200** are aligned with drainage arrangement **403A** for collecting the run-off nutrient solution from the drains of the second subset of growing troughs. The run-off nutrient solution subsequently flows through drainage arrangement **403A** into first reservoir **402A**. Thus, the nutrient solution follows a flow path circulating through reservoirs **402A** and **402B.** The circulating flow path is referred to herein as cross-mixing, which helps to maintain the uniformity of the nutrient solution in nutrient circulation system **40.** It is preferred that the first and second subsets of growing troughs are non-overlapping, so that nutrient solution pumped from one reservoir necessarily drains next into a different reservoir, thereby ensuring that the solution in different parts of the circulation system are rapidly mixed. It will be understood, however, that a similar result will be achieved (with some loss of efficacy) even if some proportion of the troughs drain back into the same reservoir from which they were supplied. Preferably at least half of the troughs supplied from a given reservoir drain into another reservoir.

Although the nutrient circulation system **40** described thus far has pertained to the achievement of cross-mixing by using two circulation subsections, other embodiments are possible in which more than two circulation subsections are used. In a non-limiting example, three circulation subsections may be used. In such an example, a first reservoir supplies nutrient solution to a second subset of growing troughs, a second reservoir supplies nutrient solution to a third subset of growing troughs, and a third reservoir supplies nutrient solution to a first subset of growing troughs. The run-off nutrient solution from the first, second, and third subsets of growing troughs drains into the first, second, and third reservoirs, respectively. A further non-limiting example may use four circulation subsections divided into two pairs, where each pair of circulation subsections independently operates according to the example described above with reference to FIG. 7.

The examples above represent a sample of the implementations possible for achieving the cross-mixing result described herein, and are not meant to limit the number of potential permutations and/or combinations of circulation subsections which achieve cross-mixing.

In addition to maintaining the uniformity of the nutrient solution, it is preferable that rate of flow of nutrient solution from each individual outlet **414** to growing troughs **200** is approximately equal. Equal flow rate may be achieved by adjusting the flow impedance in piping arrangements **410** of each circulation subsection **400.** Flow impedance adjustments can be made by including pressure and/or flow regulators in fluid flow connection with piping arrangements **410.** However, such regulators present additional links in the flow which may become clogged or malfunction, increasing the overall operating cost of system **10.** The use of pressure/flow regulators also requires the use of sufficiently powerful pumps to generate a required input working pressure for the flow regulators. To avoid these issues, certain particularly preferred implementations of nutrient circulation system **40** provide arrangements to deliver the nutrient solution at an approximately equal flow rate without the need of pressure and/or flow regulators, as will now be described.

According to certain preferred embodiments, piping arrangements **410A** and **410B** have a multiple branch structure such that there is equivalent flow impedance across respective pipe outlets **414A** and **414B,** eliminating the need for pressure and/or flow regulation. Piping arrangements **410A** and **410B** preferably include main pipes **412A** and **412B,** each of which is sequentially split at a plurality of splitting positions. This sequential splitting and the connecting pipes between the flow path branches are preferably implemented so that the flow path from main pipes **412A** and **412B** to each respective pipe outlets **414A** and **414B** has the same number of junctions and a similar length of connecting pipe, so as to exhibit equivalent flow impedances. The use of equivalent flow paths to the multiple pipe outlets together with the lack of pressure regulators and the small vertical rise of the outlets relative to the reservoir all contribute to facilitating use of low-power pumps **404A** and **404B,** thereby minimizing the energy consumption of the system.

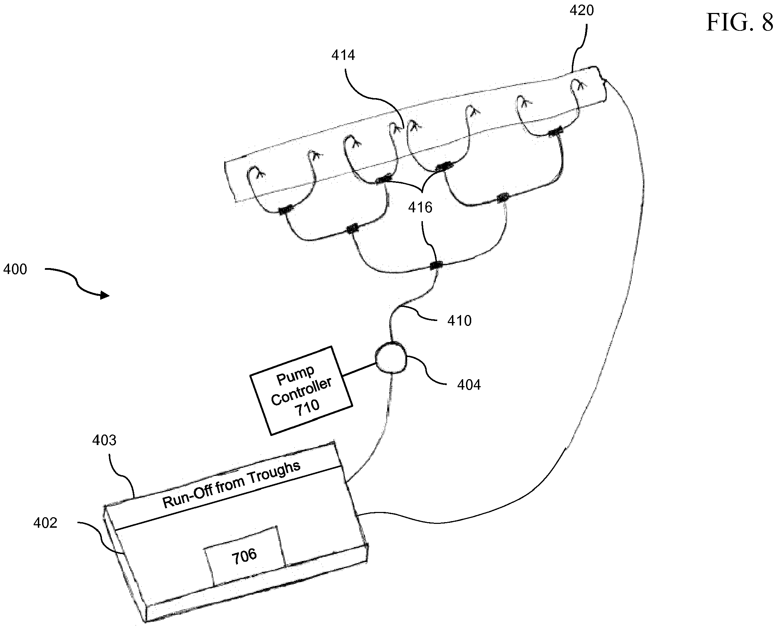

By way of one non-limiting example depicted in FIGS. 7 and 8, binary sequential splitting is used. In such an example, main pipe **412** is split into two paths, with each path subsequently split into two paths. The splitting process is carried out three times resulting in 7 splitting locations **416** and 8 pipe outlets **414** for each circulation subsection. The paths from main pipe **412** to each individual pipe outlet **414** traverse the same number of splitting locations **416,** resulting in equivalent flow impedance through each possible flow path.

Other splitting configurations are possible so long as the number of splitting locations traversed from main pipe **412** to each individual pipe outlet **414** is the same for each possible flow path. For example, three-way sequential splitting can be done by splitting the main pipe at a single point into three paths. Carrying out such a process three times would create a piping arrangement with 13 splitting locations and 27 pipe outlets. For clarity in the drawings, not all splitting locations are labeled, however all splitting locations should be apparent from the drawings.

Nutrient circulation system **40** preferably provides a constant flow of nutrient solution circulating within system **10.** It will be noted that, in preferred implementations in which growing troughs **200** are advanced along the growing area by conveyor system **30,** it may not be feasible to ensure a one-to-one matching of intake regions **214** aligned with pipe outlets **414** in a position to receive nutrient solution. In order to ensure that each trough is properly irrigated, an array of evenly spaced pipe outlets may advantageously be used, with a spacing sufficiently small to ensure that at least one pipe outlet is aligned with each trough. This approach necessarily results in a number of outlets which are not aligned with a trough intake region at any given moment. The unused nutrient solution delivered by these pipe outlets is returned by a return drainage arrangement **420A** and **420B** for recirculating unused nutrient solution from pipe outlets **414** directly back to respective reservoirs **402A** and **402B.**

Return drainage arrangements **420A** and **420B** are preferably positioned below pipe outlets **414A** and **414B** in order to collect unused nutrient solution. Return drainage arrangement **420A** preferably includes a conduit **422A** in fluid flow connection with reservoir **402B.** Likewise, return drainage arrangement **420B** preferably includes a conduit **422B** in fluid flow connection with reservoir **402A**. Drainage arrangements **420A** and **420B** are preferably inclined to allow the movement of unused nutrient solution to reservoirs **402A** and **402B** via respective conduits **422A** and **422B** under gravitational flow. This eliminates the need for additional pumping mechanisms for moving the unused nutrient solution from the drainage arrangements to the respective reservoirs. The recirculation of unused nutrient solution, in addition to the previously described cross-mixing process, maintains the uniformity of the nutrient solution. Furthermore, the recirculation of the nutrient solution helps to prevent stagnation in the reservoirs. Preferably, the average time for the nutrient solution in a reservoir between circulations through nutrient circulation system **40** is less than 10 minutes. By ensuring that the solution circulates multiple times per hour, each cycle including free-fall aeration of the solution at the nozzle supplying each trough and/or at the drainage from the trough, the system achieves very high levels of aeration of the solution. The average time between circulations for this purpose is determined by dividing the nutrient solution volume in reservoirs **402A** and **402B** by the average pumping rates of pumps **404A** and **404B.** In one particularly preferred but non-limiting implementation, nutrient circulation system **40** operates using a general aeroponic cycle which entails circulating the nutrient solution for a set duration at predefined intervals. In a particularly preferred but non-limiting implementation of such an aeroponic cycle, pumps **404A** and **404B** operate to circulate the nutrient solution for approximately 2 minutes every 10 minutes. This prevents the nutrient solution from pooling in the growing troughs of more developed crops, allowing the nutrient solution to aerate and drain from growing troughs **200.** During the operation of pumps **404A** and **404B,** at least 50% of the water is vacated from reservoirs **402A** and **402B** and introduced into piping arrangements **410A** and **410B** and growing troughs **200.** It is preferred that no more than 90% of the water in reservoirs **402A** and **402B** is vacated during the operation of pumps **404A** and **404B.**

As previously mentioned, system **10** is of particular value when situated on the rooftop of a building, most preferably as an enclosed rooftop greenhouse with an area of at least 2000 square meters. In other cases, a "distributed greenhouse" system of many small rooftop greenhouses, for example, 20 rooves each with 100 square meters of growing space, can be operated with central coordination to function as a sustainable urban agriculture system for local growing and distribution. In order to stay within the permitted structural loads for which buildings are commonly designed, it is preferred that the total weight of system **10** does not exceed 150 kg per square meter of growing area, and most preferably does not exceed 50 kg per square meter of growing area. It is also preferable that the proportion of the greenhouse area dedicated to the crop growing area is maximized. As such, it is preferred that the major elements of nutrient circulation system **40** are supported by support structure **500** within the perimeter of the growing area. In addition to maximizing the usable proportion of the available area, support structure **500** provides clearance from the underlying rooftop surface. This allows for access to the area below reservoirs **402A** and **402B** and piping arrangements **410A** and **410B** for cleaning and maintenance or the like. It is preferred that support structure **500** provides reservoirs **402A** and **402B,** as well as growing troughs **200,** with clearance of at least 30 centimeters from the underlying rooftop surface.

It is noted that the total weight of system **10** includes the weight of the nutrient solution which is circulated by nutrient circulation system **40.** As previously mentioned, system **10** operates with a strict limit on the quantity of water used in the nutrient solution. It is therefore preferred that the total volume of water used in system **10** averaged across the growing area is less than 20 liters per square meter of growing area, more preferably less than 10 liters per square meter of growing area, and most preferably no more than approximately 8 liters per square meter of growing area. For the purpose of these definitions, the "growing area" is defined as the area of the smallest polygon which encircles all growing troughs supported by support structure **500.**

Due to the relatively small quantity of water used, the quantity of evaporation of the water from the nutrient solution per day may be of a similar order of magnitude as the total quantity of nutrient solution in the circulation system. The lack of a large liquid solution buffer necessitates frequent or continuous adjustment of both the water level and the composition of the nutrient solution in order to keep liquid levels and solution concentrations within a target range.

The addition of water and the adjustment of the ingredient levels of the nutrient solution will now be described. For rooftop greenhouse growing, a mains water supply **700** is typically available for supplying water to most or all of the water consuming devices (toilets, sinks, etc.) in the building supporting system **10.** It is preferred that reservoirs **402A** and 402B are in fluid flow connection with mains water supply **700** via respective intake pipes **702A** and **702B.** A filtration device (not shown), such as a reverse osmosis system or the like, is preferably positioned in-line between mains water supply **700** and intake pipes **702A** and **702B** in order to remove salts, minerals, or any other substances from the unfiltered mains water supply which may not be suitable for the crops in growing troughs **200.** For the purpose of this description, "ingredients" are defined to be any substances which contribute to bringing the nutrient solution to its desired properties.

According to certain preferred embodiments, system **10** includes nutrient solution volume adjustment mechanisms **706A** and **706B** for adjusting the amount of water in reservoirs **402A** and **402B,** respectively. When the volume of nutrient solution in reservoir **402A** and/or **402B** falls below a threshold criteria, volume adjustment mechanism **706A** and/or **706B** allows the inflow of water from mains water supply **700.** The inflow of water is stopped once volume adjustment mechanism **706A** and/or **706B** is above the threshold criteria. It is preferred that the threshold criteria is set at the desired minimum liquid level attained in the reservoirs during the pumping cycles of pumps **404A** and **404B** to avoid the overfilling of reservoirs **402A** and **402B.** An example of a volume adjustment mechanism **706** may be a float-actuated valve in which a filler valve is connected to a filler float which floats in the nutrient solution inside a reservoir **402.** The reduction in nutrient solution volume causes filler float to fall. Once filler float falls below a threshold level (i.e. the nutrient solution volume falls below a threshold volume), filler valve is opened to allow the inflow of water from mains water supply **700.** The inflow of water causes filler float to rise with the nutrient solution level in reservoir **402.** Once the filler float rises above the threshold level, filler valve is closed, stopping the inflow of water from mains water supply **700.** It will be appreciated that other non-float-based level adjusting arrangements may equally be used, such as for example an arrangement with an electronic liquid-level sensor and an electrically controlled valve.

In the preferred but non-limiting implementation illustrated in FIG. 7, volume adjustment mechanisms **706A** and **706B** adjust the liquid level of reservoirs **402A** and **402B,** respectively. Alternatively, a single volume adjustment mechanism **706** may be used to adjust the liquid level of only one reservoir **402.** In such an alternative configuration, if necessary a level-equalizing connecting tube (not shown) may be provided to ensure that the liquid level in both (or all) reservoirs is equalized.

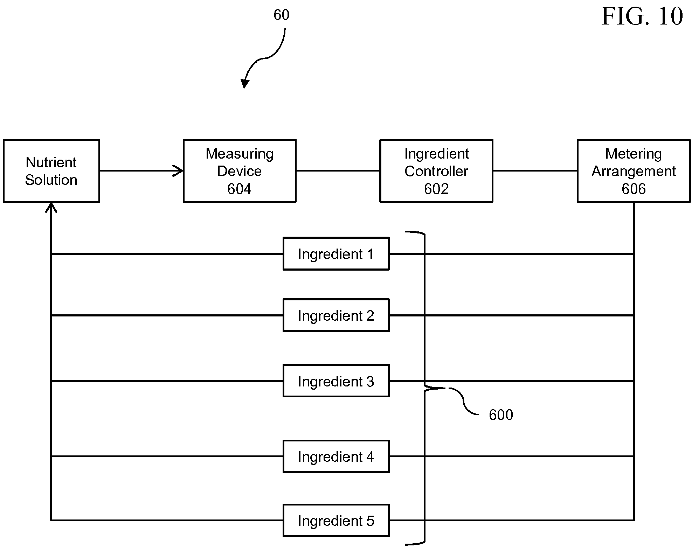

To avoid dilution of the nutrient solution, ingredient levels are adjusted by a metering system **60.** Referring to FIGS. 7 and 10, metering system **60** preferably includes a plurality of containers **600** for retaining the individual ingredients of the nutrient solution, a measuring apparatus **604** in fluid flow connection with nutrient circulation system **40** for measuring the characteristics of the nutrient solution, a metering arrangement **606** associated with each of containers **600** for delivering a controlled quantity of the ingredients, and an ingredient controller **602** associated with measuring apparatus **604** and metering arrangement **606** for actuating metering arrangement **606** to allow a specified amount of each ingredient to be added to the nutrient solution.

Metering system **60** may be placed in any suitable position, so long as fluid flow connection with nutrient circulation system **40** is maintained. FIG. 7 shows an example, for illustration purposes only, of metering system **60** positioned along the return path from return drainage arrangement **420B** and reservoir **402A**. By way of a non-limiting example as depicted in FIG. 10, the number of ingredient containers **600** is five, and each container is configured to retain a single ingredient. It is noted that the number of ingredient containers **600** are for example purposes only and should not be limited to the number of containers depicted in the drawings.

In operation, the nutrient solution from return drainage arrangement **420B** is fed to measuring apparatus **604.** The characteristics of the nutrient solution are measured by measuring apparatus **604,** which includes suitable sensors for measuring the desired characteristics. The characteristics of the nutrient solution may include, but are not limited to, pH levels, amount of total dissolved solids, and concentration levels of any specific nutrient ion in solution. Sensors suitable for measuring these characteristics are well known in the art. A controller **602** of measuring apparatus **604** determines which, if any, ingredients of the nutrient solution need to be added to the nutrient solution and in what quantity. Controller **602** then actuates metering arrangement **606** to introduce a metered quantity of the corresponding ingredients from individual containers **600** into the nutrient solution. This adjustment is repeated until measurement apparatus **604** determines that the balance of the ingredients of the nutrient solution are within a valid range. One non-limiting example of a metering system employs a peristaltic pump actuated by a stepper motor to inject a desired metered quantity of each ingredient under the control of controller **602.**

The example used to describe the operation of metering system **60** is for illustration purposes only and should not be taken to limit the position and location of metering system **60.** Metering system **60** may be positioned in any suitable location such that there is a fluid flow connection between the major elements of metering system **60** and nutrient circulation system **40.** For example, metering system **60** maybe positioned along the path from return drainage arrangement **420A** to reservoir **402B.** Alternatively, a dedicated solution adjustment flow loop with a small pump may be added, drawing solution from one of the reservoirs and returning it thereto.

System **10** is used for growing a variety of crops in large quantities. As such, it is preferable to track information about the position and contents of each individual growing trough. The position of each growing trough provides an indication as to the growing stage of the crops in a growing trough. It is therefore preferable to position electronic tag devices, such as RFID tags and the like, associated with individual growing troughs **210.** According to certain preferred embodiments, each individual growing trough **210** is associated with an RFID tag **230.** An RFID reader may be manually passed over each individual growing trough, transmitting an interrogator signal for each RFID tag **230** in growing troughs **200.** Each RFID tag **230** is configured to transmit an authentication signal in response to receiving the interrogator signal. The authentication signals received by RFID reader provide an indication as to the position of individual growing troughs **210,** as well as identifying the trough so that the corresponding crop type and growth schedule can be retrieved from a database, thereby allowing determination by a computerized crop management system of the various treatments and/or processing needed by the crops in individual growing troughs **210.** This is of particular value when the crop growing area is subdivided into different regions for different crops, where the different crops may require different services. The RFID reader is preferably associated with a processor coupled to a data storage medium such as a memory with a database in order to match RFID tags **230** with crop types and service types. The processor can be any number of computer processors including, but are not limited to, a microprocessor, an ASIC, a DSP, a state machine, and a microcontroller. Such processors include, or may be in communication with computer readable media, which stores program code or instruction sets that, when executed by the processor, cause the processor to perform actions. Types of computer readable media include, but are not limited to, electronic, optical, magnetic, or other storage or transmission device capable of providing a processor with computer readable instructions. RFID tags **230** and RFID readers are may be configured to operate in any usable range of the frequency spectrum. For example, low frequency RFID tags are operable in the low frequency (LF) band which is between 30 kHz and 300 kHz. An output from the computerized crop management system may be used to instruct the appropriate personnel to perform the required services for the required troughs, or may be used as an input to an automated or semi-automated crop treatment system for performing some or all of the crop growing services determined by the crop management system.

It will be appreciated that all controller devices in the above descriptions may be housed in a single processor or housed individually in a distributed group of processors and/or processing systems. Any or all of the processing may be executed locally on system **10** or in combination may be executed remotely via wired or wireless network or via a cloud based system.

As previously described, conveyor system **30** facilitates the incremental movement of growing troughs **200** from a planting location to a harvesting location. Upon reaching the harvesting location, the crops in a growing trough may be harvested in a variety of ways. For example, the entire crop, including the root system of the crop, may be removed from the growing trough. The empty growing trough can then be relocated to the planting location by a transport device such as a gantry or the like for the planting of a new set of crops. However, the root systems of many hydroponically grown crops are capable of producing multiple crops from a single root system. As such, upon reaching the harvesting location, the crops of a growing trough can be harvested while leaving the root system intact in the growing trough. The growing trough can then be returned to a section of the growing area near the planting location for growing a new crop from the root system of the previously harvested crop. Typically, approximately the first two weeks following planting of fresh crops is dedicated to the development of the root system of the crop. Therefore, the re-use of crop root systems increases the production rate of crops, as the new crops are grown from developed root systems from previous harvests.

It will be appreciated that the above descriptions are intended only to serve as examples, and that many other embodiments are possible within the scope of the present invention as defined in the appended claims.

## Claims

1. A system for growing crops comprising:
(a) a plurality of growing troughs, each of said growing troughs comprising:
(i) an intake region for receiving a nutrient solution; and
(ii) a drain for releasing a run-off of the nutrient solution;
(b) a nutrient circulation system for providing the nutrient solution to crops in said growing troughs comprising a plurality of circulation subsections, each of said circulation subsections comprising:
(i) a piping arrangement with a plurality of pipe outlets for distributing the nutrient solution to said intake regions of a subset of said growing troughs;
(ii) a reservoir in fluid flow connection with said piping arrangement;
(iii) a pump in fluid flow connection with said reservoir configured to pump the nutrient solution from said reservoir through said piping arrangement to said pipe outlets; and
(iv) a drainage arrangement for collecting nutrient solution from said drains of a subset of said growing troughs,
wherein, for each of said circulation subsections, said drainage arrangement collects nutrient solution from drains of a first subset of said growing troughs, and said piping arrangement distributes the nutrient solution to said intake region of a second subset of said growing troughs, said first and second subsets being non-identical such that the nutrient solution follows a flow path circulating through a plurality of said reservoirs.

2. The system of claim 1, wherein each of said piping arrangements comprises:
(A) a main pipe; and
(B) a plurality of pipe outlets, the flow from said main pipe to each of said pipe outlets constituting a flow path, each of said flow paths being the result of a sequential splitting from said main pipe such that there is an equivalent flow impedance through each of said flow paths.

3. The system of claim 1, wherein said first and second subsets are non-overlapping.

4. The system of claim 1, wherein each of said circulation subsections further comprises:
(i) a return drainage arrangement for collecting unused nutrient solution from a subset of said pipe outlets.

5. The system of claim 1, further comprising:
(a) a nutrient solution volume adjustment mechanism in fluid flow connection with at least one of said reservoirs configured for allowing the flow of water from a mains water supply to said reservoir when a total volume of nutrient solution satisfies a threshold criteria; and
(b) a metering system comprising:
(i) a measurement apparatus associated with said nutrient circulation system for measuring at least one characteristic of the nutrient solution;
(ii) a plurality of containers, each of said containers configured to hold at least one ingredient of the nutrient solution;
(iii) a metering arrangement associated with each of said containers and configured for delivering a metered quantity of each of said ingredients into said nutrient solution; and
(iv) an ingredient controller associated with said measurement apparatus and said containers for actuating said metering arrangement based on said at least one characteristic in order to maintain said at least one characteristic within a defined range.

6. The system of claim 1, wherein said growing troughs occupy a crop growing area,
and wherein a total volume of water in said nutrient circulation system is less than 20 Liters per square meter of said crop growing area.

7. The system of claim 1, wherein said growing troughs occupy a crop growing area;
and wherein the combined average weight of the system including said growing troughs and said nutrient circulation system is less than 150 kilograms per square meter of said crop growing area.

8. The system of claim 1, wherein each of said growing troughs is associated with an RFID tag operable to receive an interrogator signal and to transmit an authentication signal,
such that when an RFID reader passes over said RFID tag and transmits an interrogator signal, an authentication signal is generated.

9. The system of claim 1, further comprising:
(a) a conveyor system for moving said growing troughs from a planting location to a harvesting location, said conveyor system comprising a first conveyor assembly and a second conveyor assembly, said second conveyor assembly overlapping with said first conveyor assembly thereby defining an overlap section, each of said conveyor assemblies comprising:
(i) at least one conveyor rail;
(ii) a mechanical trough moving arrangement attached to said at least one conveyor rail reciprocally movable in a retraction direction and an advancing direction; and
(iii) a drive motor assembly associated with said trough moving arrangement for actuating movement of said trough moving arrangement in said retraction direction from a first position to a second position and in said advancing direction from said second position to said first position, the movement of said trough moving arrangement from said first position to said second position defining a stroke length,
wherein said trough moving arrangement has a set of depressible ratchet teeth deployed such that, when said mechanical trough moving arrangement is moved in said retraction direction, growing troughs positioned above said mechanical trough moving arrangement do not move, and when said mechanical trough moving arrangement is moved in said advancing direction, growing troughs positioned above said mechanical trough moving arrangement are moved in said advancing direction,
and wherein said stroke length of said second conveyor assembly is larger than said stroke length of said first conveyor assembly, and wherein said overlap section is configured such that only one of said growing troughs is transferred from said first conveyor assembly to said second conveyor assembly for each reciprocal motion of said second conveyor.

10. The system of claim 1, further comprising a support structure for supporting said growing troughs and said reservoirs spaced at least 30 centimeters above an underlying surface.

11. A system for growing crops comprising:
(a) a plurality of growing troughs, each of said growing troughs comprising:
(i) an intake region for receiving a nutrient solution; and
(ii) a drain for releasing a run-off of the nutrient solution;
(b) a circulation subsection comprising:
(i) a piping arrangement for distributing the nutrient solution to said intake regions corresponding to a subset of said growing troughs, said piping arrangement comprising:
(A) a main pipe; and
(B) a plurality of pipe outlets for providing the nutrient solution to crops in said subset of growing troughs, wherein the flow from said main pipe to each of said pipe outlets constitutes a flow path, each of said flow paths being the result of a sequential splitting from said main pipe such that there is an equivalent flow impedance through each of said flow paths;
(ii) a reservoir in fluid flow connection with said piping arrangement;
(iii) a pump in fluid flow connection with said reservoir configured to pump the nutrient solution from said reservoir through said piping arrangement to said pipe outlets.

12. A system for growing crops comprising:
(a) a plurality of growing troughs, each of said growing troughs comprising:
(i) an intake region for receiving a nutrient solution; and
(ii) a drain for releasing a run-off of the nutrient solution;
(b) a conveyor system for moving said growing troughs from a planting location to a harvesting location, said conveyor system comprising a first conveyor assembly and a second conveyor assembly, said second conveyor assembly overlapping with said first conveyor assembly thereby defining an overlap section, each of said conveyor assemblies comprising:
(i) at least one conveyor rail;
(ii) a mechanical trough moving arrangement attached to said at least one conveyor rail reciprocally movable in a retraction direction and an advancing direction; and
(iii) a drive motor assembly associated with said trough moving arrangement for actuating movement of said trough moving arrangement in said retraction direction from a first position to a second position and in said advancing direction from said second position to said first position, the movement of said trough moving arrangement from said first position to said second position defining a stroke length,
wherein said trough moving arrangement has a set of depressible ratchet teeth deployed such that, when said mechanical trough moving arrangement is moved in said retraction direction, growing troughs positioned above said mechanical trough moving arrangement do not move, and when said mechanical trough moving arrangement is moved in said advancing direction, growing troughs positioned above said mechanical trough moving arrangement are moved in said advancing direction,
and wherein said stroke length of said second conveyor assembly is larger than said stroke length of said first conveyor assembly, and wherein said overlap section is configured such that only one of said growing troughs is transferred from said first conveyor assembly to said second conveyor assembly for each reciprocal motion of said second conveyor.

13. The system of claim 12, further comprising a support structure located above said conveyor assemblies for supporting said growing troughs, said support structure comprising:
(a) a frame configured to support the weight of said growing troughs; and
(b) a plurality of legs connected to said frame, each of said legs having an adjustable length.

14. A method of growing crops comprising the steps of:
(a) obtaining a growing trough;
(b) planting a first crop in said growing trough, said first crop including a root system;
(c) moving said growing trough incrementally through a crop growing area from a planting location towards a harvesting location;
(d) harvesting said first crop in said harvesting location while leaving said root system intact in said growing trough; and
(e) transporting said growing trough to a portion of said growing area near said planting location for growing a second crop from said root system.

15. The method of claim 14, wherein said transporting is performed by a transport device deployed for moving across said crop growing area.
